# EUROPÄISCHE PATENTSCHRIFT

(11) **EP 3 414 466 B1**
(45) Veröffentlichungstag und Bekanntmachung des Hinweises auf die Patenterteilung: **29.04.2020**
(21) Anmeldenummer: 17703977.3
(22) Anmeldetag: 07.02.2017
(51) Int. Cl.: F16D 55/226, F16D 65/00, F16D 65/095

(54) **KRAFTFAHRZEUGTEILBELAGSCHEIBENBREMSE MIT IN EINEM RAHMENFÖRMIGEN HALTER PULL-ABGESTÜTZTEN REIBBELÄGEN**
MOTOR-VEHICLE PARTIALLY LINED DISK BRAKE HAVING FRICTION PADS THAT ARE PULL-SUPPORTED IN A FRAME-SHAPED RETAINER
FREIN À DISQUE À GARNITURES PARTIELLES DE VÉHICULE AUTOMOBILE COMPRENANT DES GARNITURES DE FRICTION SUPPORTÉES EN TRACTION À L'AIDE D'UN SUPPORT EN FORME DE CADRE

(30) Priorität: 09.02.2016 DE 102016201909
(43) Veröffentlichungstag der Anmeldung: 19.12.2018
(73) Patentinhaber: Continental Teves AG & Co. OHG, 60488 Frankfurt am Main (DE)
(72) Erfinder: ADAM, Thorsten, 63165 Mühlheim am Main (DE); BAUER, Jens, 63801 Kleinostheim (DE); GOLZ, Dietrich, 65520 Bad Camberg (DE); HAAG, Mathias, 64289 Darmstadt (DE); HUMMEL, Valentin, 64625 Bensheim (DE); KALFF, Christoph, 55296 Lörzweiler (DE); LANGER, Norman, 65760 Eschborn (DE); LANKES, Christian, 64560 Riedstadt (DE); PETRI, Ralph, 65843 Sulzbach/Ts. (DE); SIMON, Dirk, 63533 Mainhausen (DE)
(86) Internationale Anmeldenummer: PCT/EP2017/052653
(87) Internationale Veröffentlichungsnummer: WO 2017/137400

(56) Entgegenhaltungen:
- WO-A1-92/04553
- WO-A1-2004/018892
- DE-A1- 4 036 272
- DE-A1- 10 318 019
- DE-A1-102006 060 644
- DE-A1-102014 205 594

## Beschreibung

Die Erfindung betrifft eine Kraftfahrzeugteilbelagscheibenbremse (15) mit Bremssattel (13) als Normalkrafterzeuger dessen u-förmig gestaltetes Gehäuse, mit Gehäuseschenkeln und mit einer die beiden Gehäuseschenkel verbindenden Gehäusebrücke, einen Reibring U-förmig umgreift, und mindestens einen zugeordneten Reibbelag (1) über eine Rückenplatte (5) betätigt, die Reibwerkstoff (6) trägt und in Tangentialrichtung T vorstehende, hammerkopfförmige Klauen (7,8) zur pull-Abstützung der Bremskraft in einem Halter aufweist, wobei der Bremssattel (13) axial verschiebbar am Halter gelagert ist, und wobei der Halter über ein Halterprofil (2) verfügt, das jeweils einen einlaufseitigen Halterarm und einen auslaufseitigen Halterarm mit Aufnahmemulden (3,4) umfasst, die Auflageflächen (9,10) und/oder Stütz- bzw. Führungsflächen einschließlich Widerlager (11,12) aufweisen, und in die die Klauen (7,8) eingehängt sind, wobei eine Einleitung einer tangential gerichteten Umfangskraft (Fu, Reibkraft) in den Halter eine Zugbeanspruchung in einer Klaue (7, 8) induziert bzw. umgekehrt.

Eine besonders aushebegesicherte Teilbelagscheibenbremse der Gattung mit pull-Aufhängung der Reibbeläge ist bereits aus der Fig. 2 der DE 10 2014 202 944 A1 bekannt. Die pull-Abstützung erfolgt dabei drehrichtungsunabhängig.

Aus der DE 28 04 808 A1 ist eine Bremse bekannt, die nacheinander pull+push-Abstützung, beziehungsweise die umgekehrte Abfolge, ermöglicht, und zu diesem Zweck ganz besonders toleriert ist.

Eine Bremse gemäß dem Oberbegriff geht z.B. aus WO-A-92/04553 hervor.

Unter Komfortgesichtspunkten wird bei den gattungsgemäßen oder bekannten Scheibenbremsen mit pull-Aufhängung beanstandet, dass ein notwendigerweise präzise toleriertes aber unvermeidlich vorzuhaltendes Funktions- und Fertigungsspiel in der Führung und Abstützung zwischen Halter und Belag ein sogenanntes Reversierklacken bei Bremsbetätigung nach Fahrtrichtungswechsel verursachen kann. Demzufolge besteht die Aufgabe der vorliegenden Erfindung darin, die bekannten gattungsgemäßen Scheibenbremsen zu verbessern, und insbesondere deren Komfortnachteile zu vermeiden.

Diese Aufgabe wird im Prinzip dadurch gelöst, dass der Halter als geschlossener Rahmen ausgebildet ist, indem Halterstege 14, 14' die Halterarme miteinander verbinden, und dass die Halterstege 14,14' tangential vor die Gehäuseschenkel vom Gehäuse platziert sind. Demzufolge wird halterseitig-konstruktiv eine Aufteilung im Kraftfluss erhalten, die es ermöglicht, dass unter Verzicht auf komplexe Tolerierung sämtliche Halterarme vom Halter in den Kraftfluss zur Einleitung von Bremskräften einbezogen sind, obwohl eine unmittelbare Krafteinleitung nur an einem der Halterarme (einem Widerlager) erfolgt. Demzufolge kann Werkstoff im Bereich der Halterarme eingespart werden, oder die Tragfähigkeit vom Halter ist entsprechend erhöht. Die Erfindung betrifft des Weiteren einen besonderen Reibbelag mit Zweipunktauflage für ein Bremssattelgehäuse.

Weitere Einzelheiten der Problemlösung nach der Erfindung gehen aus den Ansprüchen zusammen mit der Beschreibung anhand der Zeichnung hervor. In der Zeichnung zeigt:
Fig. 1 eine gattungsgemäße Faustsattelbremse entsprechend Fig. 2 der DE 10 2014 202 944 A1 zwecks Erläuterung,
Fig. 2: eine schematisch verkleinerte Perspektive einer Ausführungsform einer erfindungsgemäßen Fahrzeugscheibenbremse von vorne(Faustfingerseite),
Fig. 3: schematisch verkleinerte Rückansicht von einem Halter (Aktuatorseite) ohne Reibbeläge,
Fig. 4: schematisch verkleinerte Vorderansicht von einem Halter (Faustfingerseite) mit Reibbelägen,
Fig. 5: Perspektive wie in Fig. 2 mit Einzelheiten zur radial geführt gerichteten Montage/Demontage der Bremssattelhaltefeder,
Fig. 6: Schnittansicht zur Verdeutlichung der Zweipunkt-Bremssattelauflage auf einem äußeren Reibbelag.

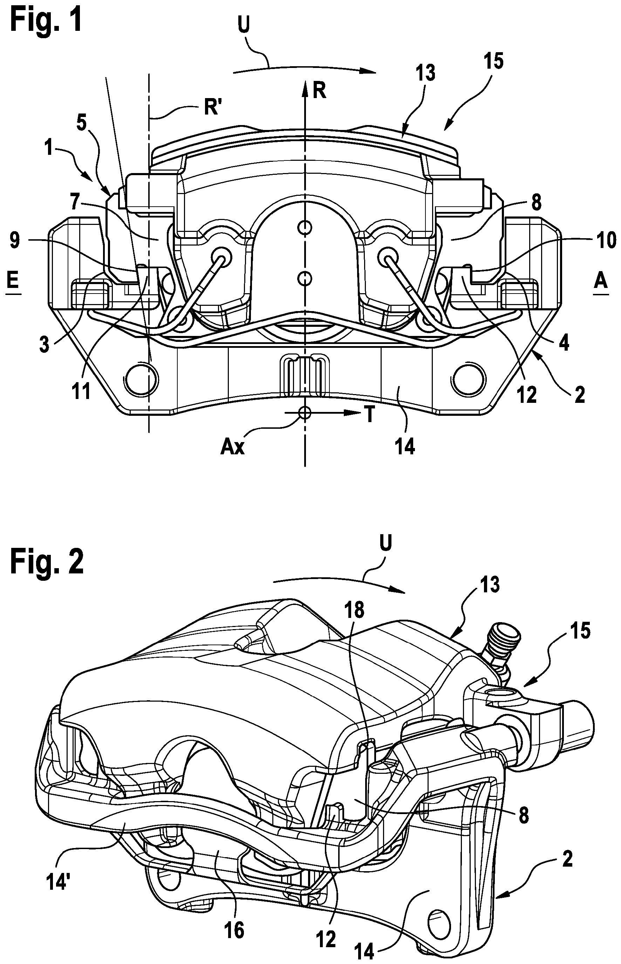

Die Fig. 1 verdeutlicht eine bekannte Fahrzeugscheibenbremse 15 vom Faustsatteltyp mit verschiebbar auf einem Halter gelagertem Gehäuse 13. Eine Funktion von dem Halter besteht darin, einen Gehäuse 13 in Axialrichtung (parallel zur Raddrehachse) relativverschiebbar, sowie im übrigen fest, zu tragen. Der Gehäuse 13 ist daher vom Faust- oder Schwimmsatteltyp, der entsprechend axialverschiebbar an dem Halter/ Halterprofil 2 gelagert ist. Dadurch reicht prinzipiell ein Aktuator als Normkrafterzeuger zur direkten Betätigung eines Reibbelags aus, und ein anderer Reibbelag wird durch Reaktionskraft an den Reibring gedrückt. Dabei kann der Aktuator hydraulische und/oder elektromechanische Betätigungsmittel umfassen.

Der Gehäuse 13 verfügt über ein u-förmiges Gehäuse, welches eine nicht gezeigte Bremsscheibe übergreift. Das Gehäuse verfügt dazu über zwei Gehäuseschenkel, die durch eine Gehäusebrücke verbunden sind. Dabei ist der innere Gehäuseschenkel mit der oder den Betätigungsvorrichtungen zur direkten Betätigung vom inneren Reibbelag versehen. Der Halter verfügt über Halterprofile 2 die in zwei Halterschenkeln vorgesehen sind. Diese umfassen Aufnahmemulden 3,4, die als radial offene Nuten gestaltet sind in die eine achssymmetrische, hammerkopfförmige Klaue einer Rückenplatte 5 eingehängt ist. Zur Ausbildung vom Reibbelag 1 ist - etwa mittig an der Rückenplatte 5 - ein klotzförmiger Reibwerkstoff 6 befestigt. Der direkt betätigte Reibbelag 1 kann mit Hilfe vom Normalkrafterzeuger, der die axial gerichtete Zuspannkraft auf die Rückenplatte 2 ausübt, an einen zugeordneten, nicht gezeigten Reibpartner - wie insbesondere an einen Reibring, an eine Bremsscheibe, oder sonstigen Rotor/Reibpartner direkt angelegt werden. Alles weitere folgt durch Reaktionskräfte. Üblicherweise dient als spannkrafterzeugendes Element eine Kolben-Zylindereinheit bzw. eine Elektromotor-Getriebeanordnung, welche in der Zeichnung zwecks Vereinfachung nicht dargestellt ist. Der Gehäuse 13kann also hydraulisch, mechanisch, elektromechanisch und/oder kombiniert durch mehrere Organe betätigt werden, und erfordert zu diesem Zweck entsprechende Betätigungsmittel.

In dem beschriebenen bekannten System verfügt ein Halterprofil 2 über die axial frei auskragend vorstehende Halterarme die primär zur Aufnahme der Reibbeläge 1 dienen. Die Reibbeläge 1 umfassen zumindest eine Rückenplatte 5 aus Stahlwerkstoff mit hammerkopfförmigen Klauenn 7,8. Direkt oder indirekt auf der Rückenplatte 5 ist der Reibwerkstoff 6 fixiert. Der Reibbelag 1 dient zur Anlage am nicht gezeigten Reibring, der gemeinsam mit einem abzubremsenden Rad um eine gemeinsame Drehachse - die parallel zu Ax gerichtet ist - rotiert. Kolbenseitig und/oder faustfingerseitig kann auf eine Rückseite der Rückenplatte 5 ein Dämpfungsblech 21 aufgebracht, insbesondere aufgeklebt, sein.

Die Kraftübertragung zwischen Reibbelag 1 und Halterprofil 2 erfolgt über wenigstens eine radial auswärts also lotrecht arrangierte Auflagefläche 9,10 die jeweils symmetrisch am hammerkopfförmigen Klaue 7,8 der Rückenplatte 5 angeordnet sind. Jeder Auflagefläche 9,10 ist jeweils ein Widerlager 11,12 im Halterprofil 2 zugeordnet ist, so dass tangential zur Bremsscheibe/Reibring eine formschlüssige Kraftübertragung unter Zugbeanspruchung der Rückenplatte 5 erfolgt. Damit diese gezogene Abstützung drehrichtungsunabhängig erfolgen kann, sind die Hammerköpfe bekannter Reibbeläge 1 jeweils achssymmetrisch zu Achse S mit zwei Klauen 7,8 versehen, welche zum Angriff an dem Halterprofil 2 dienen. Einlaufseitig (E) ist dabei stets - wie schon in der DE 10 2014 202 944 A1 definiert - auf einen ersten Eingriff zwischen Reibbelag 1 und Reibring bezogen. Beispielhaft ist in Fig. 1 durch einen Pfeil U eine Hauptdrehrichtung einer Bremsscheibe eines Personenkraftfahrzeugs (Vorwärtsfahrt) definiert.

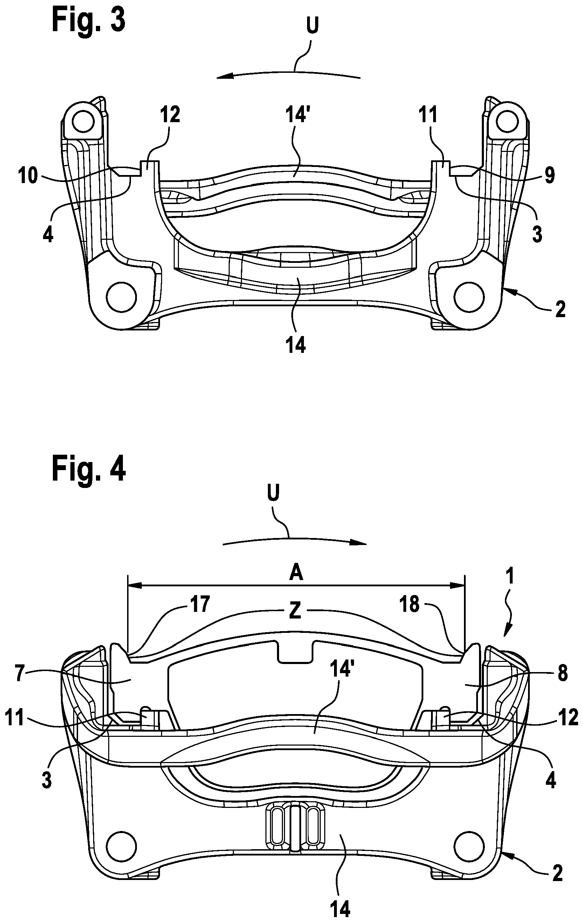

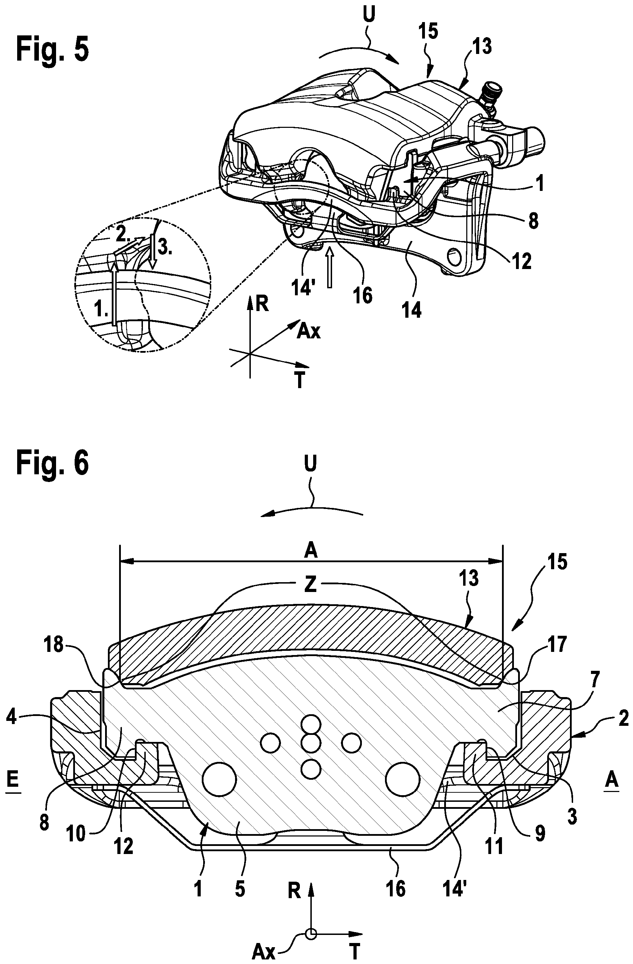

Einzelheiten der Erfindung gehen aus den Figuren 2-6 hervor. Dabei wird die vorliegende Problematik in Merkmalskombination gelöst. Generell ist der Halter dabei als in sich geschlossener Rahmen konstruiert, indem sämtliche Halterarme durch Halterstege 14, 14' miteinander verbunden sind, was sich entsprechend günstig auf die Verteilung im Kraftfluss bemerkbar macht. Dabei sind die Halterstege 14,14' raumsparend und effektiv im Wesentlichen parallel vor die Gehäuseschenkel vom Faustsattel vorgestellt angeordnet. Durch die derart geschlossene Verbindung der Halterarme des Halters, ohne freie Enden, erhält der Halter einen stabilen, in sich geschlossenen, Kraftfluss was sich in der Fertigung mit einer besonders guten Maßhaltigkeit im Bereich der Belagführung bemerkbar macht. Insbesondere können Räumprozesse mit erhöhter Präzision ausgeführt werden.

Die Halterstege 14, 14' können generell einstückig an die Halterarme angegossen sein. Dies erfordert eine neue, spezielle Gussform zur Fertigung vom Halter. Es kann sich in Abwandlung der Erfindung jedoch auch anbieten, dass wenigstens ein axial äußerer Haltersteg 14' lösbar am Halterarm fixiert ist. Beispielsweise kann ein Haltersteg mit zwei Halterarmen verschraubt sein. Diese Art einer lösbaren Verbindung erzeugt zudem ein hochwertig-technisches Erscheinungsbild. Wenn ein axial äußerer Haltersteg lösbar fixiert ist, kann dies die Wartung, wie insbesondere einen Reibbelagwechsel, erleichtern. Es ist dadurch nicht zwingend nötig, für den rahmenförmigen Halter eine gesonderte Gusstechnik zu entwickeln, sondern die konventionell gefertigten, offenen Halter werden durch Montageprozesse gewissermaßen ertüchtigt.

In zusätzlich günstiger Gestaltung der Erfindung wird eine besonders geschützte und unauffällige Platzierung einer neuartigen Blattfeder 16 als Bremssattelhaltefeder vorgeschlagen, die ausgehend von einem Bremsscheibentopf, also von radial innen nach radial außen geführt zwischen Bremssattel 13 und Halter eingespannt ist, so dass die Bremssattelhaltefeder, gewissermaßen durch Zwangsführung bei verbesserter Montierbarkeit in den optischen Hintergrund tritt. Die Demontage dieser Blattfeder 16 ist ebenfalls leichter, weil das durch die zwangsläufig Radialführung zwischen Bremssattel 13 und Halter in reversierter Art und Weise erfolgt.

Ein besonders stabiler, also klapperfreier, Angriff sowie Kraftfluss in der elastischen Vorspannung und Auflage zwischen Bremssattel 13 und Reibbelag 1 ist dabei in Verbindung mit einer besonderen Zweipunktauflage Z ermöglicht, deren Kontaktstellen 17,18 in äußerstem Abstand A zueinander jeweils im Bereich der hammerkopfförmigen Klauen 7, 8 nämlich auf deren Rücken zumindest am axial äußeren Reibbelag (outboard) arrangiert sind. Damit empfiehlt sich die Erfindung insbesondere zur Verwendung bei sogenannten Rahmensätteln mit besonders breit dimensionierter Bremssattelbrücke. Die gegenseitigen Kontaktstellen 17,18 zwischen Bremssattelbrücke und Reibbelag können einheitlich ballig, abgeschrägt oder so ausgeführt sein, dass sich jeweils unterschiedlich ausgeprägte Formgebungen zugewandt sind. Weil also das besonders ausgebildete Verschleißteil ein wesentlicher Bestandteil dieser Anordnung ist, sind demzufolge hiermit auch Reibbeläge 1 mit hammerkopfförmigen Klauen 7,8 beansprucht, welche einem Bremssattel 13 eine besonders rüttelresistente Auflage ermöglichen. Diese ist vorteilhafterweise als beabstandete, weitestgehend v-förmig geöffnete Aufnahme für die Bremssattelbrücke in Verbindung mit der Zweipunktauflage Z an den Rückseiten der beiden hammerkopfförmigen Klauen 7, 8 ausgebildet.

Die Erfindung ermöglicht also in nochmaliger Zusammenfassung folgende Vorteile:
- Vermeidung von "Klack"geräuschen, insbesondere Reversierklacken
- Verringerung von Restmoment
- Vermeidung von Reibbelagschrägverschleiß
- Erschütterungsresistente Bremssattelaufhängung - definierte Bremssattelauflage
- Einfach geführte Radialmontage einer blattförmigen Bremssattelhaltefeder
- Bremssattelhaltefeder durch Anformung von einem Schirm mit einer Zierblendenfunktion einfach kombinierbar
- Standardisierung, also identisch ausgeformte Reibbelagträger(rücken)platten für faust- und kolbenseitigem Reibbelag

### Bezugszeichenliste

- A: Abstand
- Ax: Axialrichtung
- C: Codierung
- MT: Aushebemoment
- R: Radialrichtung S Achse
- SP: Reibkraftangriffpunkt
- T: Tangentialrichtung
- U: Pfeil
- Z: Zweipuntkauflage

- 1: Reibbelag
- 2: Halterprofil
- 3,4: Aufnahmemulde
- 5: Rückenplatte
- 6: Reibwerkstoff
- 7: Klaue
- 8: Klaue
- 9: Auflagefläche
- 10: Auflagefläche
- 11: Widerlager
- 12: Widerlager
- 13: Gehäuse
- 14, 14': Haltersteg
- 15: Kraftfahrzeugteilbelagscheibenbremse
- 16: Blattfeder
- 17: KOntaktstelle
- 18: Kontaktstelle

## Patentansprüche

1. Kraftfahrzeugteilbelagscheibenbremse (15) mit Bremssattel (13) als Normalkrafterzeuger dessen u-förmig gestaltetes Gehäuse, mit Gehäuseschenkeln und mit einer die beiden Gehäuseschenkel verbindenden Gehäusebrücke, einen Reibring U-förmig umgreift, und mindestens einen zugeordneten Reibbelag (1) über eine Rückenplatte (5) betätigt, die Reibwerkstoff (6) trägt und tangential vorstehende, hammerkopfförmige Klauen (7,8) zur pull-Abstützung der Bremskräfte in einem Halter aufweist, wobei der Bremssattel (13) axial relativ zum Halter verschiebbar gelagert ist, und wobei der Halter über ein Halterprofil (2) verfügt, das jeweils einen einlaufseitigen Halterarm und einen auslaufseitigen Halterarm mit Aufnahmemulden (3,4) umfasst, die Auflageflächen (9,10) und/oder Stütz- bzw. Führungsflächen einschließlich Widerlager (11,12) aufweisen, und in die die Klauen (7,8) eingehängt sind, so dass eine Einleitung einer tangential gerichteten Umfangskraft (Fu, Reibkraft) in das Halterprofil (2) eine Zugbeanspruchung in einer Klaue (7,8) induziert bzw. umgekehrt, **dadurch gekennzeichnet dass** der Halter als geschlossener Rahmen ausgebildet ist, indem Halterstege (14,14') die Halterarme miteinander verbinden, und dass die Halterstege (14,14') tangential vor die Gehäuseschenkel vom Bremssattel (13) platziert sind, wobei zwischen Bremssattel (13) und Halter eine Blattfeder (16) eingespannt ist, die in Radialrichtung (R) zwischen Gehäuseschenkel und Halter elastisch vorgespannt vorgesehen ist, zwischen Bremssattel (13) und Reibbelag (1) eine Zweipunktauflage vorgesehen ist, deren Kontaktstellen (17,18) im Abstand (A) zueinander an der hammerkopfförmigen Klaue (7,8) definiert sind, und die gegenseitigen Kontaktstellen (17,18) zwischen Bremssattel (13) und Reibbelag (1) einheitlich ballig, abgeschrägt oder wechselweise unterschiedlich profiliert ausgeprägt sind.

2. Kraftfahrzeugteilbelagscheibenbremse (15) nach Anspruch 1, **dadurch gekennzeichnet, dass** die Halterstege (14,14') einstückig an den Halterarmen vorgesehen sind.

3. Kraftfahrzeugteilbelagscheibenbremse (15) nach Anspruch 1, **dadurch gekennzeichnet, dass** ein axial äußerer Haltersteg (14') lösbar an den beiden Halterarmen fixiert ist.

4. Kraftfahrzeugteilbelagscheibenbremse (15) nach Anspruch 1, **dadurch gekennzeichnet, dass** die Blattfeder (16) in wenigstens einer formschlüssigen Zwangsführung und/oder Aufnahme zwischen Halter und Bremssattel (13) aufgenommen ist.

5. Reibbelag (1) mit hammerkopfförmigen Vorsprüngen, die Klauen (7,8) zur pull-Abstützung in einem Halter beinhalten, für eine Kraftfahrzeugteilbelagscheibenbremse (15) mit einem Bremssattel (13) nach einem oder mehreren der vorhergehenden Ansprüche 1 - 4 **dadurch gekennzeichnet, dass** der Reibbelag (1) an Rückseiten seiner hammerkopfförmigen Klauen (7,8) über ballige oder abgeschrägte Auflagen verfügt, und wobei zwei tangential mit definiertem Abstand zueinander angeordnete Klauen (7,8) an Ihren Rückseiten eine V-förmig geöffnete Zweipunktauflage Z für eine Bremssattelbrücke des Bremssattels (13) definieren.

## Claims

1. Partially lined motor-vehicle disk brake (15) with a brake caliper (13) as a normal force generator, whose housing which is configured in a U shape, with housing limbs and with a housing bridge which connects the two housing limbs, engages in a U shape around a friction ring and activates at least one associated friction lining (1) via a backplate (5) which bears friction material (6) and has tangentially protruding, hammerhead-shaped claws (7, 8) for providing pull-support for the braking forces in a holder, wherein the brake caliper (13) is mounted so as to be slidable axially relative to the holder, and wherein the holder has a holder profile (2) which comprises in each case an inflow-side holder arm and an outflow-side holder arm with receptacle recesses (3, 4), which have bearing faces (9, 10) and/or support or guide faces including abutments (11, 12) and into which the claws (7, 8) are fitted, such that application of a tangentially directed circumferential force (Fu, friction force) to the holder profile (2) induces tensile loading in a claw (7, 8), and vice versa, **characterized in that** the holder is embodied as a closed frame **in that** holder webs (14, 14') connect the holder arms to one another, and **in that** the holder webs (14, 14') are positioned tangentially in front of the housing limbs of the brake caliper (13), wherein a leaf spring (16) is clamped in between the brake caliper (13) and holder, said leaf spring (16) being provided elastically pre-loaded in a radial direction (R) between the housing limb and holder, a two-point bearing, the contact points (17, 18) of which are defined at a distance (A) from one another on the hammerhead-shaped claw (7, 8), is provided between the brake caliper (13) and friction lining (1), and the mutual contact points (17, 18) between the brake caliper (13) and friction lining (1) are embodied in a uniformly spherical, beveled or alternately differently textured fashion.

2. Partially lined motor-vehicle disk brake (15) according to Claim 1, **characterized in that** the holder webs (14, 14') are provided integrally on the holder arms.

3. Partially lined motor-vehicle disk brake (15) according to Claim 1, **characterized in that** an axially external holder web (14') is detachably secured to the two holder arms.

4. Partially lined motor-vehicle disk brake (15) according to Claim 1, **characterized in that** the leaf spring (16) is accommodated in at least one positively locking forced guidance means and/or receptacle between the holder and brake caliper (13).

5. Friction lining (1) with hammerhead-shaped projections which contain claws (7, 8) for providing pull-support in a holder, for a partially lined motor-vehicle disk brake (15) with a brake caliper (13) according to one or more of the preceding Claims 1-4, **characterized in that** the friction lining (1) has spherical or beveled bearings on the rear side of its hammerhead-shaped claws (7, 8), and wherein two claws (7, 8) which are arranged tangentially at a defined distance from one another define a two-point bearing Z, open in a V shape, for a brake caliper bridge of the brake caliper (13) on their rear sides.

## Revendications

1. Frein à disque à garnitures partielles de véhicule automobile (15) avec un étrier de frein (13) en tant que générateur de force normale dont le boîtier en forme de U vient en prise en forme de U, avec des branches de boîtier et avec un pont de boîtier reliant les deux branches de boîtier, autour d'une bague de friction, et actionne au moins une garniture de friction associée (1) par le biais d'une plaque arrière (5), porte le matériau de friction (6) et présente des griffes (7, 8) en forme de tête de marteau, saillant tangentiellement, pour le support par traction des forces de freinage dans un organe de support, l'étrier de frein (13) étant supporté de manière déplaçable axialement par rapport à l'organe de support et l'organe de support présentant un profilé d'organe de support (2) qui comprend à chaque fois un bras d'organe de support du côté de l'entrée et un bras d'organe de support du côté de la sortie avec des creux de réception (3, 4) qui présentent des surfaces d'appui (9, 10) et/ou des surfaces de support ou de guidage incluant des butées (11, 12), et dans lesquels sont accrochées les griffes (7, 8), de telle sorte qu'une introduction d'une force périphérique orientée tangentiellement (Fu, force de friction) dans le profilé d'organe de support (2) induise une sollicitation en traction dans une griffe (7, 8) ou inversement, **caractérisé en ce que** l'organe de support est réalisé sous forme de cadre fermé par le fait que des nervures d'organe de support (14, 14') relient ensemble les bras d'organe de support et **en ce que** les nervures d'organe de support (14, 14') sont placées tangentiellement devant les branches de boîtier de l'étrier de frein (13), un ressort à lame (16) étant serré entre l'étrier de frein (13) et l'organe de support, lequel est prévu sous forme précontrainte élastiquement dans la direction radiale (R) entre les branches de boîtier et l'organe de support, un appui à deux points étant prévu entre l'étrier de frein (13) et la garniture de friction (1), dont les zones de contact (17, 18) sont définies à une distance (A) l'une de l'autre au niveau de la griffe en forme de tête de marteau (7, 8) et les zones de contact mutuelles (17, 18) entre l'étrier de frein (13) et la garniture de friction (1) étant structurées sous forme bombée de manière unitaire, biseautées ou profilées différemment l'une de l'autre.

2. Frein à disque à garnitures partielles de véhicule automobile (15) selon la revendication 1, **caractérisé en ce que** les nervures d'organe de support (14, 14') sont prévues d'une seule pièce sur les bras d'organe de support.

3. Frein à disque à garnitures partielles de véhicule automobile (15) selon la revendication 1, **caractérisé en ce qu'**une nervure d'organe de support axialement extérieure (14') est fixée de manière amovible aux deux bras d'organe de support.

4. Frein à disque à garnitures partielles de véhicule automobile (15) selon la revendication 1, **caractérisé en ce que** le ressort à lame (16) est reçu dans au moins un guidage forcé par engagement positif et/ou un logement entre l'organe de support et l'étrier de frein (13).

5. Garniture de friction (1) comprenant des saillies en forme de tête de marteau qui contiennent des griffes (7, 8) pour le support par traction dans un organe de support, pour un frein à disque à garnitures partielles de véhicule automobile (15) avec un étrier de frein (13) selon l'une quelconque ou plusieurs des revendications précédentes 1 à 4, **caractérisée en ce que** la garniture de friction (1) dispose au niveau de côtés arrière de ses griffes en forme de tête de marteau (7, 8) d'appuis bombés ou biseautés, et deux griffes (7, 8) disposées tangentiellement à une distance définie l'une de l'autre définissant au niveau de leurs côtés arrière un appui à deux points Z ouvert en forme de V pour un pont d'étrier de frein de l'étrier de frein (13).
